# EUROPÄISCHE PATENTSCHRIFT

(11) **EP 1 353 823 B1**
(45) Veröffentlichungstag und Bekanntmachung des Hinweises auf die Patenterteilung: **12.09.2007**
(21) Anmeldenummer: 02716662.8
(22) Anmeldetag: 16.01.2002
(51) Int. Cl.: B60Q 1/12

(54) **SCHEINWERFEREINHEIT FÜR EINSPURIGE ZWEIRADFAHRZEUGE**
HEADLIGHT UNIT FOR SINGLE-TRACK TWO-WHEELED VEHICLES
UNITE PHARE POUR DES VEHICULES A DEUX ROUES EN LIGNE

(30) Priorität: 19.01.2001 DE 10102292
(43) Veröffentlichungstag der Anmeldung: 22.10.2003
(73) Patentinhaber: Gropp, Stephan, 79650 Schopfheim (DE); Freudenberg, Klaus, 79199 Kirchzarten (DE)
(72) Erfinder: Gropp, Stephan, 79650 Schopfheim (DE); Freudenberg, Klaus, 79199 Kirchzarten (DE)
(74) Vertreter: Grättinger & Partner (GbR)
(86) Internationale Anmeldenummer: PCT/EP2002/000384
(87) Internationale Veröffentlichungsnummer: WO 2002/060725

(56) Entgegenhaltungen:
- EP-A- 0 661 193
- US-A- 4 868 720
- PATENT ABSTRACTS OF JAPAN vol. 2000, no. 17, 5. Juni 2001 (2001-06-05) & JP 01 127466 A (STANLEY ELECTRIC CO LTD), 19. Mai 1989 (1989-05-19)

## Beschreibung

Die Erfindung betrifft eine Scheinwerfereinheit für einspurige Zweiradfahrzeuge, insbesondere Motorräder, Motorroller oder dergleichen, welche bei Kurvenfahrt eine Neigung um ihre Längsachse erfahren, mit einer sensorgesteuerten Korrektureinrichtung für das vom abgeblendeten Fahrlicht erzeugte Lichtmuster.

Während der Kurvenfahrt eines Motorrads verläßt das Lichtmuster des Abblendlichts infolge der Fahrzeugneigung die verkehrstechnisch für das aufgerichtete Fahrzeug vorgeschriebene Form erheblich. Hierdurch wird zum einen die Sichtweite für den Fahrer in der Kurve stark reduziert, zum anderen der Gegenverkehr geblendet.

Um einer derartigen Beeinträchtigung der Verkehrssicherheit entgegenzuwirken, ist nach einem bekannten Vorschlag (DE 19817594 A1) vorgesehen, bei einem Motorrad den Lichtkegel des Abblendlichtes während der Kurvenfahrt durch Verdrehen des Scheinwerfers um seine optische Achse derart zu stabilisieren, daß für jede Kurvenneigung das Lichtmuster bezüglich der Straßenmitte im wesentlichen erhalten bleibt.

Dabei ist eine Steuereinheit vorgesehen, welche mit zwei bodenabtastungsunabhängigen Sensoren arbeitet, von denen einer die Drehung des Fahrzeugs um die Hochachse, der andere die Fahrzeugneigung um die Längsachse erfaßt. Infolge der Verdrehung des Scheinwerfers arbeitet das bekannte Scheinwerferstabilisierungssystem nicht verschleißfrei; außerdem erfordert es einen aufwändigen Bewegungsmechanismus.

Schließlich ist ein Verfahren zur Anpassung der Lichtverteilung eines Scheinwerfersystems bei Kurvenfahrten bekannt (DE 19639526 A1), bei dem während einer Kurvenfahrt einer Lichtverteilung für Geradeausfahrt eine solche mit größerer horizontaler Streubreite aufgeschaltet wird, indem jeweils mehrere Scheinwerfer zusammengeschaltet werden.

Eine gattungsgemäße, bekannte Scheinwerfereinheit an einem Motorrad (JP-A-01127466) besitzt auf beiden Seiten eines Hauptscheinwerfers je einen Hilfsscheinwerfer, der entsprechend der Neigung des Motorrads während der Kurvenfahrt zugeschaltet wird. Trotz des jeweils nach auswärts aufwärts gerichteten Lichtstrahls der Hilfsscheinwerfer ergibt sich eine unzureichende Ausleuchtung der jeweiligen Kurveninnenseite. Außerdem kann sich eine Gefährdung des Gegenverkehrs durch die Blendwirkung des aufwärts gerichteten Lichtstrahls ergeben.

Demgegenüber liegt der vorliegenden Erfindung die Aufgabe zugrunde, die Systemkosten gegenüber der bekannten Lösung deutlich zu reduzieren, indem eine einfach aufgebaute verschleißarme Scheinwerfereinheit geschaffen wird, die eine weitgehend störungsfreie Funktion bei hoher Betriebssicherheit gewährleistet. In Bezug auf die Ausleuchtung der Fahrbahnen in der Kurvenfahrt soll die Scheinwerfereinheit eine verbesserte Ausleuchtung, welche im wesentlichen jener bei Geradeausfahrt entspricht, erreichen; auch bei extremer Neigung des Fahrzeugs in der Kurve soll ein aufsteigender, den Gegenverkehr blendender Lichtkegel vermieden werden.

Diese Aufgabe wird erfindungsgemäß entsprechend den unabhängigen Patentansprüchen 1 und 2 gelöst.

Gemäß dem Kennzeichen von Anspruch 1 werden seitliche Scheinwerfer für die Kurvenfahrt alternierend eingeschaltet während ein zentraler Scheinwerfer ausgeschaltet wird. Gemäß dem Kennzeichen von Anspruch 2 wird der zentrale Scheinwerfer lediglich in seiner Helligkeit herabgedimmt.

Die erfindungsgemäße Scheinwerfereinheit, welche in Art eines Mehrfach-Facetten-Scheinwerfers ausgebildet ist, umfaßt in einer vorteilhaften Ausführungsform innerhalb eines gemeinsamen Lampengehäuses drei oder mehr darin fest montierte Scheinwerfer, wobei es sich jeweils um gleiche, üblicherweise auf dem Markt erhältliche Einzelscheinwerfer handeln kann. Wenigstens ein Scheinwerfer ist in der Mitte angeordnet, die übrigen seitlich davon, wenigstens jeweils einer auf der rechten und einer auf der linken Seite.

Zum Erzielen einer besseren Ausleuchtung, insbesondere bei Kurvenfahrt ist es zweckmäßig, die seitlich angeordneten Scheinwerfer, bezogen auf die aufrechte Lage des Fahrzeugs, tiefer als den mittleren Scheinwerfer anzuordnen, derart daß eine bogenförmige, zu den beiden Seiten hin abfallende Scheinwerferleiste entsteht. Alternativ dazu sind aber auch andere Scheinwerferanordnungen innerhalb der erfindungsgemäßen Scheinwerfereinheit denkbar, beispielsweise eine Anordnung aller Scheinwerfer in gleicher Höhe, deren umgekehrt bogenförmige Anordnung oder auch eine unsymmetrische Anordnung von Scheinwerfern. Zum Beispiel kann es zweckmäßig sein, je nachdem ob das Fahrzeug im Rechtsverkehr oder im Linksverkehr eingesetzt wird, auf der rechten oder auf der linken Seite die Scheinwerferzahl gegenüber der jeweils anderen.Seite zu erhöhen, um eine bessere Ausleuchtung quer zur Fahrbahn zu erhalten.

Mit der erfindungsgemäßen Scheinwerfereinheit wird nicht nur eine deutlich verbesserte Ausleuchtung bei Kurvenfahrt in dem unmittelbar vor dem Fahrzeug befindlichen Fahrbahnabschnitt und auf der jeweiligen Innenseite der Kurve erzielt. Ein besonderer Vorteil besteht darüber hinaus in der Vermeidung der Blendwirkung, was darauf zurückzuführen ist, daß in der Kurvenfahrt nur jeweils ein seitlicher Scheinwerfer bzw. die Scheinwerfer auf einer Seite bezüglich des zentralen Scheinwerfers eingeschaltet sind, während die gegenüberliegende Scheinwerferseite und der Mittelscheinwerfer ausgeschaltet sind, insbesondere aber dadurch, daß der seitliche Scheinwerfer bzw. die seitlichen Scheinwerfer um ihre optische Achse aus der Horizontallage verdreht angeordnet sind, und zwar jeweils zur kurveninneren Seite hin. Dadurch ist der Scheinwerferkegel auf beiden Seiten des in Kurvenfahrt geneigten Fahrzeugs zur Fahrbahnoberfläche hin gerichtet, im wesentlichen unter Aufrechterhaltung des vorgesehenen Lichtstrahlmusters. Letzteres ist insbesondere von Bedeutung bei der Fahrt mit abgeblendetem Fahrlicht, weil dadurch der auf der rechten Seite verlängerte seitliche Lichtast im wesentlichen erhalten bleibt und auf der linken Seite, die sonst unvermeidliche Blendwirkung bei Einsatz eines üblichen Scheinwerfers, der aus der stark geneigten Fahrzeuglage nach oben leuchtet, unterbunden wird.

Ein geeigneter Neigungsausgleichswinkel für die Verdrehung der seitlichen Scheinwerfer liegt zwischen 25 und 35°, bevorzugt bei 30°, wobei im Rahmen der erfindungsgemäßen Ausgestaltung das Einschalten eines seitlichen Scheinwerfers erst nach Überschreiten eines Kippwinkels von 10 bis 20°, bevorzugt bei 15°, vorgesehen ist. Das bedeutet, daß erst bei Erreichen einer diesem Kippwinkel entsprechenden Fahrzeugneigung das Umschalten vom zentralen Scheinwerfer auf einen seitlichen Scheinwerfer erfolgt, und zwar beim Fahren einer Linkskurve auf den rechten Seitenscheinwerfer und beim Fahren einer Rechtskurve auf den linken Seitenscheinwerfer. Dabei versteht sich von selbst, daß das Umschalten vom zentralen Scheinwerfer auf einen seitlichen Scheinwerfer eingangs der Kurve und ein umgekehrtes Umschalten ausgangs der Kurve erfolgt, d.h. wenn der Fahrer sein Fahrzeug bei Beendigung der Kurvenfahrt wieder soweit aufrichtet, daß der minimale Kippwinkel in der Aufwärtsbewegung unterschritten wird.

Um das Ausleuchten der Fahrbahn vor dem Fahrzeug in der Kurvenfahrt zu verbessern, ist nach einem weiteren erfindungsgemäßen Vorschlag vorgesehen, daß die seitlich an den mittleren Scheinwerfer anschließenden Scheinwerfer jeweils um ihre zur Hochachse des Fahrzeugs parallele Achse zum mittleren Scheinwerfer hin verschwenkt angeordnet sind, so daß ihre optische Achse mit einer durch Längs- und Hochachse gelegten Mittelebene des Fahrzeugs einen Schwenkwinkel bilden, der bevorzugt 4 bis 8° beträgt. Dieser Schwenkwinkel kann zweckmäßiger Weise einen unterschiedlichen Wert für den rechten und für den linken Scheinwerfer annehmen, wobei bei Rechtsverkehr der rechte, bei Linksverkehr der linke Scheinwerfer geringfügig stärker nach innen verschwenkt wird als der jeweils andere Scheinwerfer; geeignete Schwenkwinkel sind beispielsweise 5 bzw. 7°.

Mit der erfindungsgemäßen Scheinwerfereinheit gelingt es, bei der Kurvenfahrt mit Zweiradfahrzeugen eine Ausleuchtung wie bei Geradeausfahrt zu erzielen, d.h. statt eines üblicherweise verzerrten, stark verkleinerten schlecht ausgeleuchteten Lichtmusters ergibt sich auch in der Kurvenfahrt infolge des Umschaltens zwischen den Scheinwerfern ein im wesentlichen den Vorschriften für die Geradeausfahrt entsprechendes Lichtstrahlmuster.

Dabei genügt für eine lückenlose Ausleuchtung der Fahrbahn während des Umschaltens ohne Dunkelpause das gleichzeitige Umschalten der Scheinwerferlampen, weil durch die Trägheit der Glühlampe des abgeschalteten Scheinwerfers der verzögerte Aufbau der Lichtleistung beim eingeschalteten Scheinwerfer überbrückt wird. Alternativ kann jedoch eine stufenlose Überblendung zwischen den beiden Scheinwerfern in der Weise vorgesehen sein, daß bei aktivierter Stabilisierungseinrichtung die Scheinwerfer von der Steuereinheit derart angesteuert werden, daß die seitlichen Scheinwerfer vor dem Ausschalten bzw. nach dem Einschalten des zentralen Scheinwerfers ein- bzw. ausgeschaltet werden. Durch ein derartiges Überblenden beim Umschalten von einem Scheinwerfer auf den anderen ist eine besonders lampenschonende Ansteuerung der Scheinwerfer erreichbar.

Im Lampengehäuse mit den drei oder mehreren Scheinwerfern sind auch eine Sensoreinheit und die Steuereinheit untergebracht. Im Inneren des Lampengehäuses sind die Einzelscheinwerfer jeweils an einer Montageplatte einzeln justierbar befestigt. Die einzelnen Scheinwerferlampen sind wie handelsüblich mit Mehrfachreflektor für Auf- und Abblendlicht versehen. Das Scheinwerfergehäuse besitzt eine gemeinsame Frontscheibe mit an die Einzelscheinwerfer angepassten Streuabschnitten.

Die Stabilisierungseinrichtung umfaßt in an sich bekannter Weise eine Sensoreinheit mit zwei Sensoren, einen Längsachsensensor, der die Fahrzeugneigung um die Längsachse des Fahrzeugs mißt und einen Hochachsensensor, der während des Durchfahrens einer Kurve die Fahrzeugbewegung um die Hochachse mißt, wobei die Sensoren jeweils zur Winkelgeschwindigkeit proportionale Signale an die Steuereinheit leiten.

Der Hochachsensensor dient dabei der Erhöhung der Meßgenauigkeit der Schräglage des Fahrzeugs; er trägt zur Verbesserung der Betriebssicherheit insofern bei, als seine Meßwerte in einem Rechner der Steuereinheit im Rahmen einer Plausibilitätsprüfung verwertet werden, in dem die durch den Längsachsensensor ermittelte Schräglage verglichen wird mit dem Verlauf der Fahrzeugbewegung beim Durchfahren einer Kurve. Der genannte Rechner verwertet, wie erläutert, die Signale beider Sensoren und ermittelt daraus den Übergang zwischen der im wesentlichen aufrechten Fahrt und der Kurvenfahrt indem er die jeweilige Neigung des Fahrzeugs mit dem minimalen Kippwinkel vergleicht. Dabei werden die Sensorsignale durch Filterung, Linearisierung und Temperaturkompensation korrigiert. Die bei Ein- und Ausleiten der Kurvenfahrt errechneten Schaltzeitpunkte werden entsprechend umgesetzt in Schaltvorgänge eines Leistungsteils zur Betätigung der Scheinwerfer.

Vorteilhaft beinhaltet die Steuereinheit eine Sicherheitsschaltung, die bei Ausfall des zentralen Scheinwerfers die seitlichen Scheinwerfer mit entsprechend geteilter Leistung einschaltet und bei Ausfall der seitlichen Scheinwerfer den zentralen Scheinwerfer mit voller Leistung einschaltet.

Dadurch, daß die erfindungsgemäße Scheinwerfereinheit aus einzelnen handelsüblichen Scheinwerfern zusammengesetzt ist, ergeben sich niedrige Systemkosten. Mit Ausnahme der Glühlampen selbst kommt die erfindungsgemäße Scheinwerfereinheit ohne Verschleißteile aus, was außerdem zu einer entsprechenden Erhöhung ihrer Funktionssicherheit und Lebensdauer beiträgt. Dadurch, daß die Blendwirkung weitgehend ausgeschaltet ist, besteht die Möglichkeit, auch Scheinwerfer mit höheren Lichtleistungen einzusetzen. Die erfindungsgemäße Scheinwerfereinheit kann an den Kabelanschluß für einen konventionellen Scheinwerfer an dessen Stelle als Nachrüstsatz montiert werden.

Die verwendeten Sensoren arbeiten ohne Bodenabtastung oder Geschwindigkeitsabgriff nach dem Prinzip des piezoelektrischen schwingungsabhängigen Gyroskops, welche auf dem Markt erhältlich sind.

Im folgenden wird ein Ausführungsbeispiel der Erfindung anhand der Zeichnung erläutert. Es zeigt
- Fig. 1: ein Lichtstrahlmuster der verkehrstechnisch üblichen Art in Geradeausfahrt eines Motorrads;
- Fig. 2: das Lichtstrahlmuster gemäß Figur 1 in einer Linkskurve;
- Fig. 3: das Lichtstrahlmuster gemäß Figur 1 in einer Rechtskurve;
- Fig. 4: die erfindungsgemäße Scheinwerfereinheit in der Frontansicht eines Motorrads bei Kurvenfahrt nach rechts;
- Fig. 5: das Lichtstrahlmuster der erfindungsgemäßen Scheinwerfereinheit in einer Rechtskurve;
- Fig. 6: das Lichtstrahlmuster der erfindungsgemäßen Scheinwerfereinheit in einer Linkskurve;
- Fig. 7: die erfindungsgemäße Scheinwerfereinheit in schematischer Frontansicht;
- Fig. 8: einen Schnitt gemäß VIII-VIII der Figur 7 und
- Fig. 9: einen Schnitt gemäß IX-IX der Figur 7.

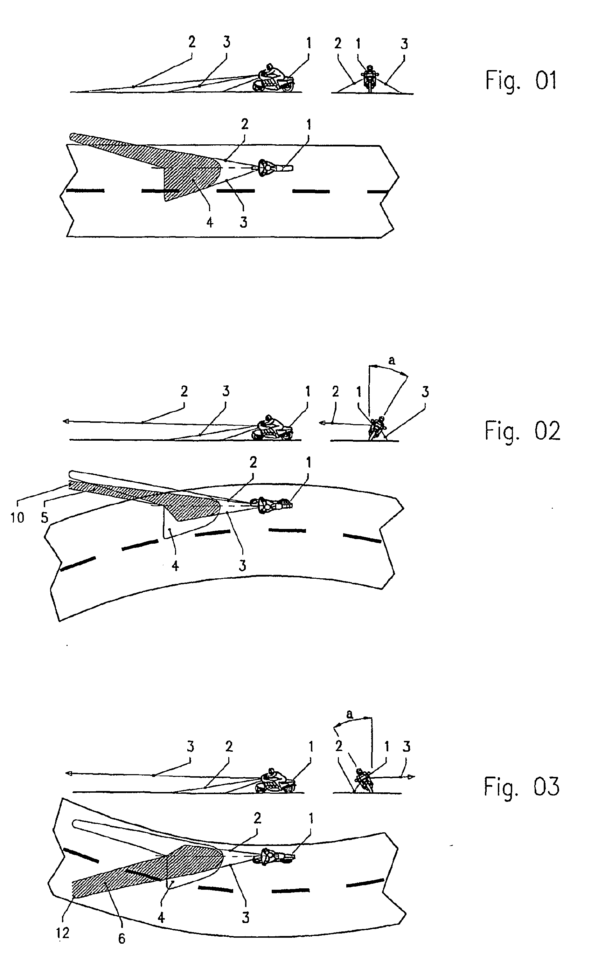

Figur 1 zeigt ein Lichtstrahlmuster in der verkehrstechnisch vorgeschriebenen Form mit der ausgeleuchteten Fläche 4 bei Geradeausfahrt mit einem in Fahrtrichtung linken Begrenzungsstrahl 3 und einem rechten Begrenzungsstrahl 2 bei einem dem Rechtsverkehr angepaßten Abblendlicht eines Motorrads 1 mit handelsüblichem Scheinwerfer.

Figur 2 zeigt das Motorrad 1 in einer Linkskurve. Infolge seiner Kurvenneigung gemäß dem Winkel a ergibt sich eine gegenüber Figur 1 reduzierte ausgeleuchtete Fläche 5. Ein auf der Kurveninnenseite liegender Anteil der Fläche 4 wird nicht mehr ausgeleuchtet. Der rechte Begrenzungsstrahl 2 erreicht nicht mehr den Boden und wird damit zum Blendstrahl 10. Für den Fahrer des mit einem üblichen Scheinwerfer ausgestatteten Motorrads 1 leistet damit der asymmetrische Ast des Abblendlichts keinen Beitrag mehr zur Verbesserung der Straßensicht entlang der rechten Begrenzung der Fahrbahn.

Figur 3 zeigt das Motorrad 1 bei der Kurvenfahrt in einer Rechtskurve. Infolge der Schräglage des Motorrads 1 um den Neigungswinkel a ergibt sich eine ausgeleuchtete Fläche 6, welche quer über die Fahrbahn verläuft. Der rechte Begrenzungsstrahl 2 leuchtet nicht mehr den rechten Straßenrand aus und der linke Begrenzungsstrahl 3 trifft nicht mehr auf dem Boden auf und wird damit zum Blendstrahl 12. Wie bei Figur 2 weicht das Lichtmuster erheblich von den durch Sicherheitsüberlegungen entwickelten verkehrstechnischen Vorschriften ab.

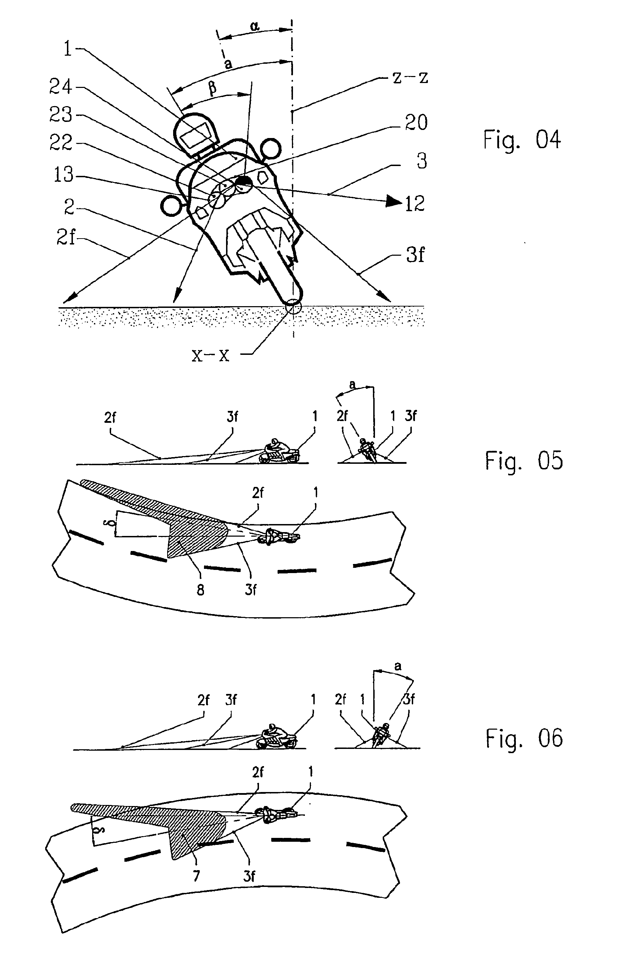

Figur 4 zeigt in vergrößerter Darstellung das Motorrad 1 in der Frontansicht mit der erfindungsgemäßen "Mehrfach-Facetten"-Scheinwerfereinheit 13 in einer Rechtskurve. Die Scheinwerfereinheit umfaßt drei einzelne eng aneinander montierte Scheinwerfer in einem gemeinsamen Scheinwerfergehäuse 20, nämlich einen zentralen Scheinwerfer 23, einen rechten Scheinwerfer 22 und einen linken Scheinwerfer 24. In der gezeigten Rechtskurve ist nur der linke Scheinwerfer 24 eingeschaltet, welcher gegenüber dem zentralen Scheinwerfer 23 um einen Neigungsausgleichswinkel β zur Kurvenaussenseite hin verdreht montiert ist. Das Motorrad selbst ist um den Winkel a geneigt, welcher größer ist als ein minimaler Kippwinkel α, der etwa einer Neigung von 15° um die Längsachse X-X gegenüber einer von dieser mit der Hochachse Z-Z aufgespannten Ebene entspricht. Mit Erreichen des Kippwinkels α sorgt eine Steuereinheit für das Einschalten des linken Scheinwerfers 24. Die auf den zentralen Scheinwerfer 23 bezogenen, zu den Figuren 1 bis 3 eingezeichneten Begrenzungsstrahlen 2, 3 kommen hier nicht zum Tragen. Stattdessen sorgt der linke Scheinwerfer 24 für Begrenzungsstrahlen 2f, 3f, welche auf den Boden gerichtet sind und infolge der Verdrehung des linken Scheinwerfers 24 um den Neigungsausgleichswinkel β, der etwa 30° beträgt ein Lichtmuster erzeugen, welches auch in der Kurvenfahrt etwa dem vorgeschriebenen Bild entspricht, wie die folgenden Figuren 5 und 6 zeigen.

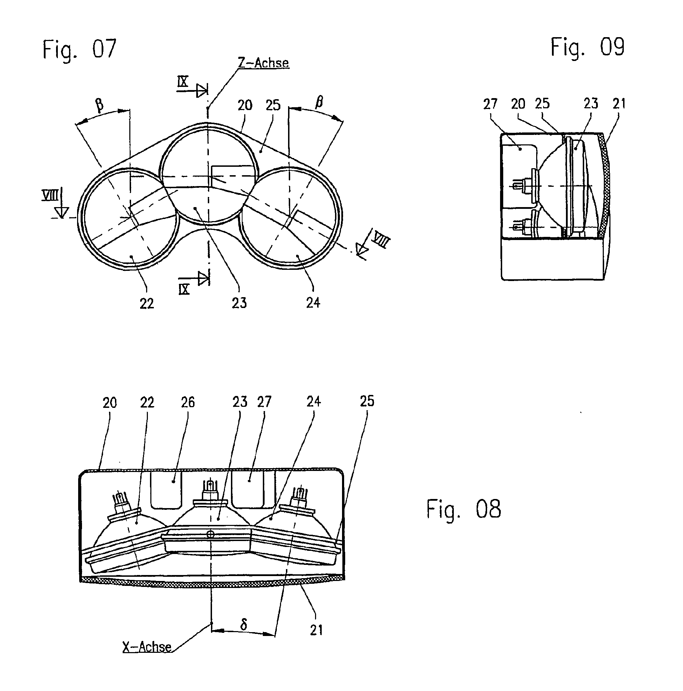

In einer vom Motorrad 1 gefahrenen Rechtskurve, wie in Figur 4 dargestellt, ergibt sich gemäß Fig. 5 eine ausgeleuchtete Fläche 8 mit den Begrenzungsstrahlen 2f und 3f. Das Lichtstrahlmuster, welches der ausgeleuchteten Fläche 8 entspricht, ist dabei um den Winkel δ geringfügig in Richtung der Kurveninnenseite verschwenkt. Der Schwenkwinkel δ des linken Scheinwerfers 24 ist in Figur 8 eingezeichnet, er beträgt etwa 5°. Dadurch wird erreicht, daß der asymmetrische Ast des Lichtstrahlmusters entlang der Innenbegrenzung der Fahrbahn verläuft, wie es den Vorschriften entspricht.

Um zu vermeiden, daß sich das vom Gegenverkehr erkennbare Lichtbild der Scheinwerfereinheit (13) bei Kurvenfahrt durch Ein- und Ausschalten einzelner Scheinwerfereinheiten ändert, können jeweils zwei nicht aktive Lichtquellen (22) und (24) bei der Geradeausfahrt oder (22) und (23) in der Rechtskurve oder (23) und (24) in der Linkskurve mit geringerer Leuchtleistung als die jeweils verbleibende dritte Lichtquelle betrieben werden, d.h. alle drei Lichtquellen bleiben stets eingeschaltet. In der Rechtskurve werden die beiden rechten Scheinwerfer (22) und (23) mit blendfreier Leuchtleistung, der linke Scheinwerfer (24) wird mit voller Leuchtleistung betrieben. In der Linkskurve werden die beiden linken Scheinwerfer (23) und (24) mit blendfreier Leuchtleistung, der rechte Scheinwerfer (22) wird mit voller Leuchtleistung betrieben. Bei der Geradeausfahrt werden die beiden äußeren Scheinwerfer (22) und (24) mit geringerer Leuchtleistung, der zentrale Scheinwerfer (23) wird mit voller Leuchtleistung betrieben. Mit dieser Steuerschaltung bleibt die gesamte Kontur der eingeschalteten Scheinwerfereinheit (13) für den entgegenkommenden Verkehr als ganzheitliches Lichtbild erhalten.

Im Ergebnis wird je nach Schräglage nur der Scheinwerfer, welcher entsprechend der jeweiligen Schräglage am günstigsten sein Strahlmuster auf die Fahrbahn projiziert, mit voller Leuchtleistung betrieben. Somit bleibt stets die gesamte Lichtkontur der eingeschalteten Scheinwerfereinheit (13) für den entgegenkommenden Verkehr als einheitliches Signalbild erhalten.

Figur 6 zeigt die zu Figur 5 entsprechende Darstellung bezogen auf eine Linkskurve. Hier kommt der rechte Scheinwerfer 22 zum Einsatz, der ebenfalls um einen Winkel δ zum zentralen Scheinwerfer hin verschwenkt ist, wie sich wiederum aus Figur 8 ergibt. Der rechte Scheinwerfer 22 ist geringfügig stärker verschwenkt als der linke Scheinwerfer 24, nämlich um etwa δ = 7°. Dadurch wird erreicht, daß die ausgeleuchtete Fläche 7 stärker in Richtung der Kurveninnenseite der Linkskurve hineingelenkt wird. Sowohl hier als auch beim Durchfahren der Rechtskurve gemäß Figur 5 wird die Entstehung eines Blendstrahls wirkungsvoll vermieden.

Die Lichtstrahlmuster, welche gemäß den Figuren 1 bis 3 den Stand der Technik zeigen und gemäß den Figuren 5 und 6 den Zustand mit der erfindungsgemäßen Scheinwerfereinheit zeigen, sind zur Verdeutlichung des jeweils mit zusätzlichen Darstellungen des Motorradfahrers in der Seitenansicht und in der Frontansicht ergänzt, wobei der Strahlenverlauf in Richtung einer vertikalen Ebene verdeutlicht wird. Die zusätzlichen Darstellungen sind einschließlich der Bezugszeichen aus sich heraus verständlich, so daß die genannten Figuren jeweils als Gesamtdarstellung behandelt werden konnten.

Figuren 7 bis 9 zeigen den prinzipiellen Aufbau der erfindungsgemäßen Scheinwerfereinheit, vorliegend in Form einer Dreifach-Facetten-Scheinwerfereinheit, bei welcher die beiden seitlichen Scheinwerfer 22, 24 tiefer angeordnet sind als der zentrale Scheinwerfer 23. In einem Gehäuse 20 sind drei handelsübliche Scheinwerfer 22, 23, 24 mit Auf- und Abblendlicht dicht nebeneinander eingebaut. Die drei Einzelscheinwerfer sind an einer Montageplatte 25 einzeln und justierbar befestigt. Sie befinden sich hinter einer Frontscheibe 21, welche das Scheinwerfergehäuse 20 verschließt und die Einbauten des Gehäuses 20 vor Umwelteinflüssen schützt.

In der Geradeausfahrt ist nur der zentrale Scheinwerfer 23 eingeschaltet. Dies gilt auch für leichte Kurven, die mit geringeren Schräglagen bis zu einem Kippwinkel α von 10 bis 20°, bevorzugt 15°, durchfahren werden. Der rechte Scheinwerfer 22 und der linke Scheinwerfer 24 sind in Geradeausfahrt bei Abblendlicht zweckmäßig ausgeschaltet.

Der rechte Scheinwerfer 22, wird in Linkskurven bei Überschreitung des minimalen Kippwinkels α eingeschaltet, die beiden anderen Scheinwerfer sind dann ausgeschaltet. Der rechte Scheinwerfer 22 ist so montiert, daß er bei frontaler Betrachtung um seine optische Längsachse um einen Neigungsausgleichswinkel β = 30° entgegen dem Uhrzeigersinn verdreht ist; außerdem ist er um eine zur Z-Achse parallele Achse in Richtung auf den zentralen Scheinwerfer 23 um einen Schwenkwinkel δ = 7° verschwenkt angeordnet, so daß der Sichtbereich des Fahrers in Richtung auf die Kurveninnenseite verbessert wird.

Der linke Scheinwerfer 24 wird zur Ausleuchtung beim Fahren von Rechtskurven mit Durchschreiten des minimalen Kippwinkels α = 15° eingeschaltet. Die beiden anderen Scheinwerfer sind bei dieser Kurvenfahrt ausgeschaltet. Montiert ist der linke Scheinwerfer so, daß er ebenfalls um einen Neigungsausgleichswinkel β = 30° im Uhrzeigersinn verdreht und außerdem um die Z-Achse in Richtung auf den zentralen Scheinwerfer 23 um den Schwenkwinkel δ = 5° verschwenkt positioniert ist. Damit wird der Sichtbereich des Fahrers in Richtung auf die Kurveninnenseite deutlich verbessert.

Im Inneren des Scheinwerfergehäuses 20 sind neben den drei Scheinwerfern auch noch die Elektronik 26 zum Schalten des Leistungsteils und ein Rechner 27 mit Längsachsensensor und Hochachsensensor eingebaut, welche nicht im Einzelnen dargestellt sind.

Der Leistungsteil enthält Halbleiterschalter für die Scheinwerferlampen und eine integrierte Ausfallerkennung für die einzelnen Lampen.

Der Längsachsensensor ist in Richtung der X-Achse orientiert und mißt die Winkelgeschwindigkeit zur Kippbewegung des Fahrzeugs beim Ein- und Ausleiten der Kurvenfahrt.

Der Hochachsensensor ist in Richtung der Z-Achse orientiert und mißt die Winkelgeschwindigkeit des Fahrzeugs um den Mittelpunkt der durchfahrenen Kurve. Der Rechner 27 berechnet aus den Sensorsignalen die Neigung des Fahrzeugs um die X-Achse und bedient die Ansteuerung des Leistungsteils bei Durchlaufen des minimalen Kippwinkels α.

Im Ergebnis beträgt der Drehfehler bei der Abbildung des Lichtstrahlmusters in der Kurvenfahrt maximal noch plus oder minus 15°, während im Vergleich dazu bei Motorrädern mit Standardscheinwerfern der Drehfehler bis zu 45° beträgt, was den großen Beitrag des erfindungsgemäßen Vorschlags zur Verbesserung der Verkehrssicherheit verdeutlicht.

## Patentansprüche

1. Scheinwerfereinheit für einspurige Zweiradfahrzeuge, insbesondere Motorräder, Motorroller oder dergleichen, welche bei Kurvenfahrt eine Neigung um ihre Längsachse (X) erfahren, mit einer sensorgesteuerten Korrektureinrichtung für das vom abgeblendeten Fahrlicht erzeugte Lichtstrahlmuster,
wobei
die Scheinwerfereinheit (13) wenigstens einen zentralen Scheinwerfer (23) für die Geradeausfahrt und je einen rechts und links daneben angeordneten seitlichen Scheinwerfer (22,24) aufweist, d**adurch gekennzeichnet**, daß der rechte Scheinwerfer (22) zum Ausleuchten bei Linkskurven und der linke Scheinwerfer (24) zum Ausleuchten bei Rechtskurven jeweils um seine optische Achse aus der Horizontallage mit dem vom zentralen Scheinwerfer (23) entfernten Außenrand nach unten um einen Neigungsausgleichswinkel (β) verdreht angeordnet ist und
daß die Korrektureinrichtung eine elektronische Steuereinheit umfaßt, welche innerhalb eines Fahrbereichs für im wesentlichen aufrechte Fahrt wenigstens den zentralen Scheinwerfer (23) einschaltet und in der Kurvenfahrt mit Durchschreiten eines minimalen Kippwinkels (α) wenigstens entweder den linken (24) oder den rechten Scheinwerfer (22) einschaltet, und
daß bei aktivierter Korrektureinrichtung die Scheinwerfer von der Steuereinheit derart angesteuert werden, daß die seitlichen Scheinwerfer (22,24) vor dem Ausschalten bzw. nach dem Einschalten des zentralen Scheinwerfers (23) ein- bzw. ausgeschaltet werden.

2. Scheinwerfereinheit für einspurige Zweiradfahrzeuge, insbesondere Motorräder, Motorroller oder dergleichen, welche bei Kurvenfahrt eine Neigung um ihre Längsachse (X) erfahren, mit einer sensorgesteuerten Korrektureinrichtung für das vom abgeblendeten Fahrlicht erzeugte Lichtstrahlmuster,
wobei
die Scheinwerfereinheit (13) wenigstens einen zentralen Scheinwerfer (23) für die Geradeausfahrt und je einen rechts und links daneben angeordneten seitlichen Scheinwerfer (22, 24) aufweist, **dadurch gekennzeichnet, daß** der rechte Scheinwerfer (22) zum Ausleuchten bei Linkskurven und der linke Scheinwerfer (24) zum Ausleuchten bei Rechtskurven jeweils um seine optische Achse aus der Horizontallage mit dem vom zentralen Scheinwerfer (23) entfernten Außenrand nach unten um einen Neigungsausgleichswinkel (β) verdreht angeordnet ist und
daß die Korrektureinrichtung eine elektronische Steuereinheit umfaßt, welche innerhalb eines Fahrbereichs für im wesentlichen aufrechte Fahrt den zentralen Scheinwerfer (23), in der Kurvenfahrt mit Durchschreiten eines minimalen Kippwinkels (α) entweder den linken (24) oder den rechten Scheinwerfer (22) mit voller Leuchtleistung einschaltet, während jeweils die beiden anderen Scheinwerfer mit geringerer, blendfreier Leuchtleistung eingeschaltet bleiben.

3. Scheinwerfereinheit nach Anspruch 1,
**dadurch gekennzeichnet,**
**daß** in der Kurvenfahrt nur entweder der linke (24) oder der rechte Scheinwerfer (22) eingeschaltet ist, hingegen die beiden anderen Scheinwerfer ausgeschaltet sind.

4. Scheinwerfereinheit nach Anspruch 1 oder 2,
**dadurch gekennzeichnet,**
**daß** die Steuereinheit eine Sicherheitsschaltung beinhaltet, die bei Ausfall des zentralen Scheinwerfers (23) die seitlichen Scheinwerfer (22,24) mit entsprechend geteilter Leistung einschaltet und bei Ausfall wenigstens eines seitlichen Scheinwerfers (22,24) den zentralen Scheinwerfer (23) mit voller Leistung einschaltet.

5. Scheinwerfereinheit nach Anspruch 1 oder 2,
**dadurch gekennzeichnet,**
**daß** die seitlich an den zentralen Scheinwerfer (23) anschließenden Scheinwerfer (22,24), bezogen auf die aufrechte Lage des Fahrzeugs (1), tiefer als der mittlere Scheinwerfer (23) angeordnet sind.

6. Scheinwerfereinheit nach Anspruch 1 oder 2,
**dadurch gekennzeichnet,**
**daß** die seitlich an den zentralen Scheinwerfer (23) anschließenden Scheinwerfer (22,24) jeweils um ihre zur Hochachse (Z) des Fahrzeugs (1) parallele Achse zum mittleren Scheinwerfer (23) hin verschwenkt angeordnet sind, so daß ihre optische Längsachse mit einer durch Längs- (X) und Hochachse (Z) gelegten Mittelebene des Fahrzeugs (1) einen Schwenkwinkel (δ) bilden.

7. Scheinwerfereinheit nach Anspruch 1 oder 2,
**dadurch gekennzeichnet,**
**daß** der Neigungsausgleichswinkel (β) 25 bis 35°, bevorzugt 30°, beträgt.

8. Scheinwerfereinheit nach Anspruch 1 oder 2,
**dadurch gekennzeichnet,**
**daß** der Kippwinkel (α) 10 bis 20°, bevorzugt 15°, beträgt.

9. Scheinwerfereinheit nach Anspruch 6,
**dadurch gekennzeichnet,**
**daß** der Schwenkwinkel (δ) 4 bis 8° beträgt und daß bevorzugt bei Rechtsverkehr der rechte (22), bei Linksverkehr der linke Scheinwerfer (24) stärker verschwenkt wird als der jeweils andere.

10. Scheinwerfereinheit nach Anspruch 1 oder 2,
**dadurch gekennzeichnet,**
**daß** die Scheinwerfer der Scheinwerfereinheit in einem gemeinsamen Scheinwerfergehäuse (20) aufgenommen sind.

11. Scheinwerfereinheit nach Anspruch 10,
**dadurch gekennzeichnet,**
**daß** im oder in Verbindung mit dem Scheinwerfergehäuse (20) auch eine Sensoreinheit und die Steuereinheit untergebracht sind.

12. Scheinwerfereinheit nach Anspruch 10,
**dadurch gekennzeichnet,**
**daß** das Scheinwerfergehäuse (20) mit drei Scheinwerferlampen (22,23,24), jeweils mit Mehrfachreflektor für Auf- und Abblendlicht und einer an die Lampen angepaßte Streuabschnitte (21)aufweisenden Frontscheibe versehen ist.

13. Scheinwerfereinheit nach Anspruch 1 oder 2,
**dadurch gekennzeichnet,**
**daß** die Stabilisierungseinrichtung eine Sensoreinheit mit zwei Sensoren umfaßt, einen Längsachsensensor, der die Fahrzeugneigung um die Längsachse (X) mißt, und einen Hochachsensensor, der beim Durchfahren einer Kurve die Fahrzeugbewegung um die Hochachse (Z) mißt, wobei die Sensoren jeweils zur Winkelgeschwindigkeit proportionale Signale an die Steuereinheit leiten.

## Claims

1. A headlamp unit for single-lane two-wheel vehicles, in particular motorcycles, motor scooters etc., which bank along their longitudinal axis (X) when cornering, with a sensor-controlled correction device for the light beam pattern generated by dipped driving light, whereby the headlamp unit (13) at least features a central headlamp (23) for driving straight ahead and one headlamp (22, 24) each located on the right and left side, **characterised in that** the right headlamp (22) is meant for lighting when cornering leftwards and the left headlamp (24) when cornering rightwards, said alignment being rotated through an inclination compensation angle (β) respectively about its optical axis from the horizontal position, with the remote outside edge of the central headlamp (23) facing downwards, and that the correction device comprises an electronic control unit that at least switches on the central headlamp (23) within a driving area for essentially driving in upright posture and when cornering, upon exceeding a minimum tilt angle (α), at least either switches on the left (24) or the right headlamp (22), and that upon the activation of a correction device, the headlamps are controlled by the control unit such that the lateral headlamps (22, 24) are switched on or off prior to switching off or after switching on the central headlamp (23).

2. The headlamp unit for single-lane two-wheel vehicles, in particular motorcycles, motor scooters etc., which bank along their longitudinal axis (X) when cornering, with a sensor-controlled correction device for the light beam pattern generated by dipped driving light, whereby the headlamp unit (13) at least features a central headlamp (23) for driving straight ahead and one headlamp (22,24) each located on the right and left side, **characterised in that** the right headlamp (22) is meant for lighting when cornering leftwards and the left headlamp (24) for lighting when cornering rightwards, said alignment being respectively rotated through an inclination compensation angle (β) about its optical axis from the horizontal position, with the remote outside edge of the central headlamp (23) facing downwards, and that the correction device comprises an electronic control unit that switches on the central headlamp (23) within a driving area for essentially driving in upright posture, when cornering, upon exceeding a minimum tilt angle (α), either switches on the left (24) or the right headlamp (22) with full luminosity, whereas the two other headlamps remain switched on with less, glare-free luminosity.

3. The headlamp unit according to Claim 1 **characterised in that** when cornering only either the left (24) or the right headlamp (22) is switched on, on the other hand, the two other headlamps are switched off.

4. The headlamp unit according to Claim 1 or 2, **characterised in that** the control unit contains a safety circuit that switches on the side headlamps (22, 24) with correspondingly split output power in case the central headlamp (23) fails and at least if one side headlamp (22, 24) fails it switches on the central headlamp (23) with full output power.

5. The headlamp unit according to Claim 1 or 2, **characterised in that** the headlamps (22, 24) that laterally adjoin the central headlamp (23), based on the upright position of the vehicle (1), are located lower than the middle headlamp (23).

6. The headlamp unit according to Claim 1 or 2, **characterised in that** the side of the headlamps (22, 24) adjoining the central headlamp (23) are located in a tilted manner respectively about their axis parallel to the vertical axis (Z) of the vehicle (1) relative to the middle headlamp (23), so that their optical longitudinal axis with a middle plane of the vehicle (1) through the longitudinal axis (X) and vertical axis (Z) form a tilt angle (δ).

7. The headlamp unit according to Claim 1 or 2 **characterised in that** the banking compensation angle (β) is between 25 and 35°, preferably 30°.

8. The headlamp unit according to Claim 1 or 2 **characterised in that** the dump angle (α) lies between 10 and 20°, preferably 15°.

9. The headlamp unit according to Claim 6, **characterised in that** the tilt angle (δ) is between 4° and 8° and that for the right-hand traffic the right headlamp (22) and for the left-hand traffic the left headlamp (24) is preferably tilted more than the respective other one.

10. The headlamp unit according to Claim 1 or 2 **characterised in that** the lamps of the headlamp unit are accommodated in a common headlamp housing (20).

11. The headlamp unit according to Claim 10 **characterised in that** also a sensor unit and the control unit are accommodated either inside or in connection with the headlamp housing (20).

12. The headlamp unit according to Claim 10, **characterised in that** the headlamp housing (20) with three headlamps (22, 23, 24) is provided respectively with multiple reflectors for full-beam light and dipped light and a windscreen featuring scattering sections (21) are adapted to the lamps (21).

13. The headlamp unit according to Claim 1 or 2, **characterised in that** the stabilisation device comprises a sensor unit with two sensors, a longitudinal axis sensor that measures the vehicle's inclination about the longitudinal axis (X), and a vertical axis sensor that when cornering measures vehicular movement about the vertical axis (Z), in which case the sensors convey signals to the control unit, said signals being proportional to the angular velocity.

## Revendications

1. Unité phare pour des véhicules à deux roues en ligne, notamment des motocyclettes, des scooters ou similaires qui, au passage en courbe, s'inclinent autour de leur axe longitudinal (X), cette unité étant équipée d'un dispositif commandé par des capteurs pour corriger le modèle de faisceau lumineux produit par l'éclairage de croisement, l'unité phare (13) comprenant au moins un projecteur central (23) pour la circulation en ligne droite, et des projecteurs latéraux gauche et droit (22, 23), **caractérisée en ce que**
- le projecteur droit (22) pour éclairer dans les courbes à gauche, le projecteur gauche (24) pour éclairer dans les courbes à droite, est tourné autour de son axe optique à partir de la position horizontale, de manière que le bord externe éloigné du projecteur central (23) se trouve abaissé d'un angle de compensation d'inclinaison β,
- le dispositif de correction comprend une unité électronique de commande qui, dans une zone où la circulation est essentiellement droite, enclenche au moins le projecteur central (23), tandis que dans un passage en courbe où un angle minimal de basculement α est dépassé, au moins le projecteur gauche (24) ou le projecteur droit (22) est enclenché et, quand le dispositif de correction est activé, les projecteurs sont pilotés par l'unité de commande, de manière que les projecteurs latéraux (22, 24) sont enclenchés ou coupés respectivement avant la coupure ou après l'enclenchement du projecteur central (23).

2. Unité phare pour des véhicules à deux roues en ligne, notamment des motocyclettes, des scooters ou similaires qui, au passage en courbe, s'inclinent autour de leur axe longitudinal (X), cette unité étant équipée d'un dispositif commandé par des capteurs pour corriger le modèle de faisceau lumineux produit par l'éclairage de croisement, l'unité phare (13) comprenant au moins un projecteur central (23) pour la circulation en ligne droite, et des projecteurs latéraux gauche et droit (22, 23), **caractérisée en ce que**
- le projecteur droit (22) pour éclairer dans les courbes à gauche, le projecteur gauche (24) pour éclairer dans les courbes à droite, est tourné autour de son axe optique à partir de la position horizontale, de manière que le bord externe éloigné du projecteur central (23) se trouve abaissé d'un angle de compensation d'inclinaison β,
- le dispositif de correction comprend une unité électronique de commande qui, dans une zone où la circulation est essentiellement droite, enclenche au moins le projecteur central (23), tandis que dans un passage en courbe où un angle minimal de basculement α est dépassé, le projecteur gauche (24) ou le projecteur droit (22) est enclenché à pleine puissance d'éclairage, les deux autres projecteurs restant enclenchés avec une puissance plus faible non éblouissante.

3. Unité phare selon la revendication 1, **caractérisée en ce que** dans un passage en courbe, seul le projecteur gauche (24) ou le projecteur droit (22) est enclenché, les deux autres projecteurs étant coupés.

4. Unité phare selon la revendication 1 ou 2, **caractérisée en ce que** l'unité de commande comprend un circuit de sécurité qui, en cas de défaillance du projecteur central (23) enclenche les projecteurs latéraux (22, 24) avec une puissance répartie en correspondance et, dans le cas de défaillance d'au moins un projecteur latéral (22, 24), enclenche le projecteur central (23) à pleine puissance.

5. Unité phare selon la revendication 1 ou 2, **caractérisée en ce que** les projecteurs latéraux (22, 24) suivant directement le projecteur central (23), sont plus bas que celui-ci quand la motocyclette 1 est en position verticale.

6. Unité phare selon la revendication 1 ou 2, **caractérisée en ce que** chacun des projecteurs (22, 24) jouxtant latéralement le projecteur central (23), est monté tourné autour de son axe parallèle à l'axe vertical (Z) du véhicule à deux roues (1) par rapport au projecteur central (23), de manière que son axe optique longitudinal forme un angle de déviation δ avec le plan médian du véhicule (1) défini par l'axe longitudinal (X) et l'axe vertical (Z).

7. Unité phare selon la revendication 1 ou 2, **caractérisée en ce que** l'angle de compensation d'inclinaison (β) est de 25 à 35°, de préférence 30°.

8. Unité phare selon la revendication 1 ou 2, **caractérisée en ce que** l'angle de basculement (α) est de 10 à 20°, de préférence 15°.

9. Unité phare selon la revendication 6, **caractérisée en ce que** l'angle de déviation (δ) est de 4 à 8°, et dans le cas de circulation à droite, de préférence le projecteur droit (22), tandis que dans le cas de circulation à gauche, de préférence le projecteur gauche (24), est dévié plus fortement que l'autre.

10. Unité phare selon la revendication 1 ou 2, **caractérisée en ce que** les projecteurs de l'unité de phares sont logés dans un boîtier de projecteurs (20) commun.

11. Unité phare selon la revendication 10, **caractérisée en ce que** dans ou en liaison avec le boîtier de projecteurs (20) sont également montées une unité de capteurs et une unité de commande.

12. Unité phare selon la revendication 10, **caractérisée en ce que** le boîtier de projecteurs (20) est équipé de trois projecteurs (22, 23, 24) dont chacun présente un réflecteur multiple pour éclairage de route et éclairage de croisement, et une vitre frontale présentant des sections de diffusion ajustées aux lampes.

13. Unité phare selon la revendication 1 ou 2, **caractérisée en ce que** le dispositif de stabilisation comprend une unité de captage avec deux capteurs, à savoir un capteur d'axe longitudinal qui mesure l'inclinaison du véhicule autour de l'axe longitudinal (X) et un capteur d'axe vertical qui, au passage en courbe, mesure le déplacement du véhicule autour de l'axe vertical (Z), ces capteurs délivrant chacun à l'unité de commande des signaux proportionnels à la vitesse angulaire.
